# FASCICULE DE BREVET EUROPEEN

(11) **EP 2 550 549 B1**
(45) Date de publication et mention de la délivrance du brevet: **10.09.2014**
(21) Numéro de dépôt: 11712200.2
(22) Date de dépôt: 18.03.2011
(51) Int. Cl.: G01T 1/29, G01T 1/204

(54) **DETECTEUR DE PHOTONS A HAUTE ENERGIE**
DETEKTOR ENERGIEREICHER PHOTONEN
HIGH-ENERGY PHOTON DETECTOR

(30) Priorité: 22.03.2010 FR 1052047
(43) Date de publication de la demande: 30.01.2013
(73) Titulaire: Commissariat à l'Énergie Atomique et aux Énergies Alternatives, 75015 Paris (FR)
(72) Inventeur: YVON, Dominique Franck Marie, F-78210 Saint Cyr L'Ecole (FR); RENAULT, Jean Philippe, F-91300 Massy (FR)
(74) Mandataire: Lebkiri, Alexandre
(86) Numéro de dépôt international: PCT/EP2011/054153
(87) Numéro de publication internationale: WO 2011/117158

(56) Documents cités:
- AMAUDRUZ P ET AL: "Simultaneous reconstruction of scintillation light and ionization charge produced by 511keV photons in liquid xenon: Potential application to PET", NUCLEAR INSTRUMENTS & METHODS IN PHYSICS RESEARCH, SECTION - A:ACCELERATORS, SPECTROMETERS, DETECTORS AND ASSOCIATED EQUIPMENT, ELSEVIER, AMSTERDAM, NL, vol. 607, no. 3, 21 août 2009 (2009-08-21) , pages 668-676, XP026392568, ISSN: 0168-9002 [extrait le 2009-06-24]
- CHEPEL V YU ET AL: "Liquid xenon multiwire chamber for positron tomography", NUCLEAR INSTRUMENTS & METHODS IN PHYSICS RESEARCH, SECTION - A:ACCELERATORS, SPECTROMETERS, DETECTORS AND ASSOCIATED EQUIPMENT, ELSEVIER, AMSTERDAM, NL, vol. A367, no. 1, 11 décembre 1995 (1995-12-11), pages 58-61, XP004006157, ISSN: 0168-9002, DOI: DOI:10.1016/0168-9002(95)00528-5
- CHEPEL ET AL: "A new liquid xenon scintillation detector for positron emission tomography", INTERNATIONAL JOURNAL OF RADIATION APPLICATIONS AND INSTRUMENTATION. PART D. NUCLEAR TRACKS AND RADIATION MEASUREMENTS, PERGAMON, vol. 21, no. 1, 1 janvier 1993 (1993-01-01), pages 47-51, XP027270904, ISSN: 1359-0189 [extrait le 1993-01-01]

## Description

L'invention se rapporte principalement à un détecteur de photons à haute énergie, typiquement supérieure à 0,5 MeV. Un tel détecteur peut être utilisé, par exemple, dans la tomographie par émission de positrons (TEP), à application clinique ou biologique, dans la recherche en physique nucléaire et, plus généralement, dans la mesure d'énergie de photons.

La TEP est une application majeure dans la détection des photons à haute énergie, c'est-à-dire supérieure à 0,5 MeV, par exemple dans le domaine de la médecine et de la pharmacie où elle permet notamment d'obtenir des images relatives à des organes ou à des tissus biologiques in vivo, notamment à l'intérieur d'un organisme humain ou animal.

De la même manière que pour les autres examens de médecine nucléaire, la réalisation d'un examen TEP nécessite l'injection d'un traceur radioactif. Un traceur est constitué d'un vecteur moléculaire, et d'un isotope radioactif qui permet de localiser la distribution de la molécule au sein de l'organisme. Le choix d'un isotope est déterminé d'une part en fonction des propriétés chimiques qui conditionnent la possibilité de marquage, et d'autre part en raison du mode de désintégration qui permet une détection externe du rayonnement émis. Pour sa mise en oeuvre, un des avantages de la TEP par rapport aux autres techniques de médecine nucléaire est qu'elle a à sa disposition un éventail d'éléments chimiques d'intérêt biologique pour le marquage. En effet, il se trouve que sur les quatre principaux constituants des systèmes biologiques, trois possèdent des isotopes qui se désintègrent par émission de positrons : le carbone 11, l'azote 13 et l'oxygène 15.

Son développement clinique a été obtenu grâce au fluor 18 (¹⁸F) qui s'intègre facilement dans des molécules intervenant dans des métabolismes. De ce fait, la TEP permet de suivre de tels métabolismes et, notamment, de détecter des zones à forte consommation de glucose comme les zones cancérigènes.

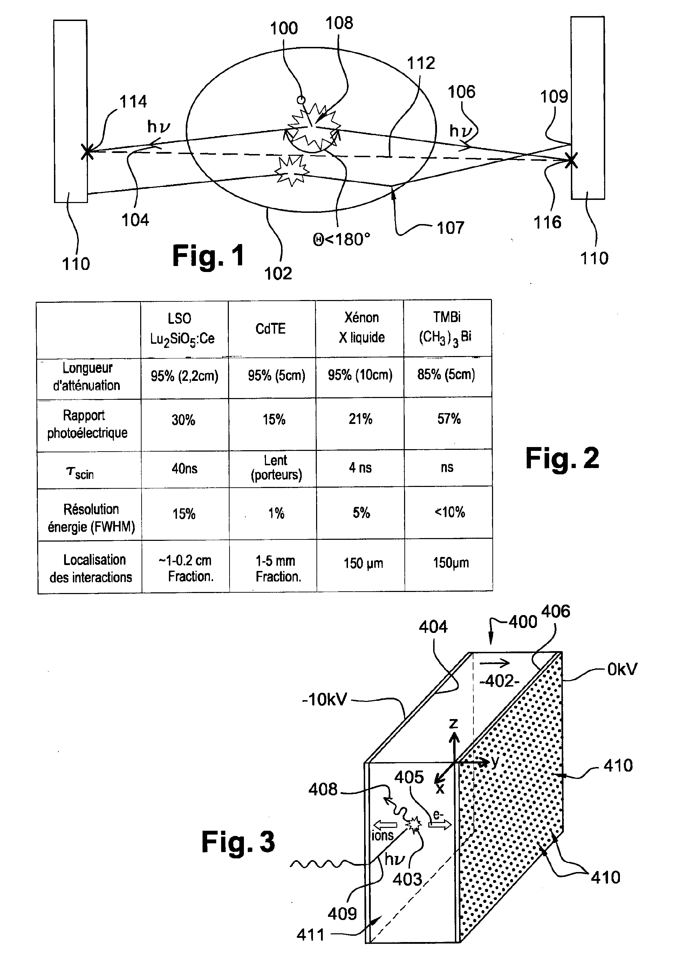

En référence à la figure 1, la TEP est donc basée sur l'émission d'un positron 100 dans une source 102 étudiée afin que ce positron 100 s'annihile - ou se désintègre - avec un électron en générant deux photons-gamma 104 et 106, d'une énergie de 511 keV chacun, émis de façon pratiquement colinéaire selon des sens opposés à partir d'un point 108 de désintégration.

Grâce à un détecteur 110 de photons entourant la source 102 de positron, le point 108 de désintégration peut être déterminé comme porté par le segment 112 reliant les deux points 114 et 116 de détection des photons 104 et 106 dans le volume du détecteur 110. Ainsi, pratiquement, on injecte au patient une molécule d'intérêt biologique tel qu'un sucre (ou dopamine...) marqué par un produit radioactif. Les cellules cancéreuses, qui ont une plus grande activité que les cellules saines, vont en priorité absorber ce sucre un peu particulier, qui n'est pas métabolisé par les cellules. Le marqueur radioactif, souvent du Fluor 18, se désintègre en émettant un positron (l'antiparticule des électrons) qui s'annihile à son tour avec un électron de l'environnement en émettant selon deux directions opposées deux photons-gamma (d'une énergie déterminée de 511 keV).

A partir de millions de reconstructions de segments tels que le segment 112, il est alors possible de représenter par contraste des zones fortement émettrices de photons vis-à-vis de zones faiblement émettrices de photons qui traduisent, respectivement, des zones présentant une forte concentration d'isotopes vis-à-vis de zones présentant une faible concentration d'isotopes.

Les performances demandées par les cliniciens à une machine TEP concernent le rendement global de la machine (voir plus loin) mais aussi la précision de l'image finale. Il est utile ici de rappeler le mécanisme de détection des photon-gamma dans un détecteur TEP avant de définir les paramètres qui conduisent à l'obtention de cette précision.

Lorsqu'un photon-gamma pénètre dans un détecteur, il interagit de plusieurs façons avec le milieu de détection. Le plus souvent, le photon-gamma interagit par l'effet Compton et diffuse sur un électron sans effectuer un transfert total de son énergie. Les interactions dues à l'effet Compton sont parfois utilisées mais, globalement, elles sont source d'inefficacités. Les interactions dites « photoélectriques » permettent de signer une désintégration de positron : cette interaction dissipe ponctuellement toute l'énergie du photon incident (511 keV).

Un des paramètres important pour comparer les différents détecteurs est le « rapport photoélectrique », c'est-à-dire le rapport de la section efficace photoélectrique sur la section efficace totale. Il dépend du milieu utilisé dans le détecteur. Un autre paramètre est la distance parcourue par le photon-gamma avant d'interagir avec le milieu. Cette distance est exprimée en « longueur d'atténuation » et elle est d'autant plus petite que le milieu à traverser est dense.

Le photoélectron qui est produit lors de l'interaction photoélectrique est en général absorbé sur une courte distance par le milieu de détection. Il est susceptible de réagir avec les molécules présentes en son sein pour :
- les ioniser et entrainer la formation « d'électrons d'ionisation »,
- les exciter et produire des « photons de scintillation ».

Dans les appareils de TEP traditionnels, c'est la détection des photons de scintillation, par un dispositif dit « photodétecteur », qui permet de calculer l'énergie déposée dans les cristaux inorganiques scintillants et de dater la détection. Le « rendement de scintillation », défini comme le nombre de photons de scintillation produits par MeV d'énergie déposée, est aussi un paramètre important car pour certains systèmes TEP il impacte la résolution en énergie (résolution permettant d'écarter des photons dont l'énergie ne correspond pas aux 511 keV caractéristiques d'une désintégration d'un positron). Le phénomène de scintillation produit des photons avec une distribution temporelle décrite par une exponentielle décroissante de constante de temps τ_{S}, appelée constante de temps de décroissance de la scintillation.

La constante de temps τ_{S} de décroissance de la scintillation lumineuse et le rendement de scintillation ont un impact direct sur la « résolution temporelle » que l'on peut définir comme l'incertitude sur la date de détection d'une interaction par le détecteur. C'est un paramètre important car elle détermine la durée de la fenêtre temporelle qui permet à un détecteur d'associer deux détections de photons de scintillation provenant de la désintégration d'un positron (phénomène dit « de coïncidence »).

Dans certains détecteurs prototypes (Xénon liquide, CdTe) les « électrons d'ionisation » sont collectés par un plan collecteur de charges, de façon à pourvoir faire, suivant les cas, un repérage géométrique et/ou une mesure de l'énergie collectée.

Les performances demandées par les cliniciens ne concernent pas seulement la précision de l'image finale mais aussi l'efficacité (i.e. pourcentage des désintégrations de positrons détectées) dont l'augmentation a pour conséquence directe de réduire l'irradiation des patients et du personnel soignant. Les machines TEP actuelles ont une efficacité qui dépasse rarement 1 à 2 %. Ce taux est très faible car la majorité des photons-gamma émis par le positron subit l'effet Compton, soit dans l'organisme étudié (efficacité variable entre 1% à 9%) soit dans le milieu de détection (efficacité usuellement inférieure à 30 %). L'amélioration de l'efficacité de la partie « détecteur » de la machine TEP est une des voies permettant d'augmenter le rendement global d'une machine TEP.

Compte tenu de son fonctionnement, un détecteur de TEP est intrinsèquement dépendant de trois résolutions:
- Une résolution spatiale des déterminations effectuées (reconstructions de segments tels que le segment 112), cette résolution spatiale étant limitée par une distance de l'ordre de 0,8mm-1,5mm que, statistiquement, un positron parcourt avant d'être annihilé par un électron (cette valeur dépend de l'isotope marqueur utilisé ; elle est par exemple de 1 mm pour le fluor 18, de 1,1 mm pour le carbone 11, de 1,4mm pour l'azote 13 et 1,5mm pour l'oxygène 15);
- Une résolution temporelle (définie ci-dessus) qui est typiquement de l'ordre de quelques nanosecondes.
- Une résolution en énergie, qui permet d'écarter des photons dont l'énergie ne correspond pas aux 511 keV caractéristiques d'une désintégration d'un positron. Typiquement, de tels photons à écarter sont par exemple générés par effet Compton qui se produit lorsqu'un photon 107 diffuse sur la source 102 sans effectuer un transfert total de son énergie de telle sorte que le même photon 107 génère une détection ultérieure 109 faussée vis-à-vis de la trajectoire du photon ainsi dévié.

Le tableau de la figure 2 illustre différents paramètres physiques de détecteurs de TEP en fonction des différents milieux utilisés pour la détection.

Il convient de souligner que la majorité des détecteurs 110 utilisés en TEP est basé sur l'utilisation de scintillateurs inorganiques à base de cristaux (tels que le BGO de formule Bi₃Ge₄O12, ou le LSO de formule Lu₂SiO₅:Ce) couplés à un dispositif photodétecteur tel qu'un photomultiplicateur ou une photodiode à avalanche APD (pour « Avalanche PhotoDiode » en anglais), et bientôt peut-être à des Compteurs de Photons Multi-Pixels (MPPC) qui font partie de la famille des « Photomultiplicateurs semiconducteur». Ces cristaux sont notamment caractérisés par une forte densité afin d'accroître les chances d'interaction de la matière avec le photon à absorber (densité, en g.cm⁻³, généralement supérieure à 6). Cette densité permet d'avoir de faibles longueurs d'atténuation (typiquement 95% de conversion photoélectrique sur une épaisseur active de 2.2cm pour le LSO).

Avec une constante de temps de décroissance τ_{S} de l'ordre de 40 ns, le LSO du fait de son rendement de scintillation exceptionnel (de l'ordre de 30000 photons de scintillation par MeV d'énergie déposée) permet d'atteindre des résolutions temporelles de 1 à 3 nanosecondes.

Après une détection, le détecteur est inefficace pour mesurer une seconde détection pendant un laps de temps court appelé temps mort. En l'espèce, les cristaux de LSO présentent un faible temps mort (de l'ordre de 100 ns correspondant à deux ou trois fois la constante de temps τ_{S} de décroissance), ce qui permet de suivre efficacement la fréquence de détection demandée par les machines TEP (de l'ordre de plusieurs KHz par cm²).

Les scintillateurs inorganiques à base de cristaux de type LSO présentent toutefois certaines difficultés, notamment un rapport photoélectrique faible - 30% aujourd'hui - qui traduit la perte de 70 % des photons reçus par un effet Compton.

De plus, la résolution en énergie dominée par le rendement de scintillation des cristaux demeure insuffisante, de l'ordre de 15% à 511 keV.

En outre, la localisation des interactions est directement liée à la taille du cristal utilisé. On utilise généralement des cristaux dont la dimension latérale est de l'ordre du cm ; utiliser des cristaux plus petits implique de procéder à un fractionnement des cristaux obtenus induisant un surcoût de fabrication important.

On connait également des détecteurs en TEP basés sur l'utilisation de semiconducteur, tel que le CdTe. De tels détecteurs présentent toutefois des caractéristiques moins intéressantes que celles des détecteurs à cristaux, en particulier les détecteurs LSO. Ainsi, les détecteurs CdTe nécessitent une épaisseur active de 5cm pour convertir 95% des photons et présentent un rapport photoélectrique très faible et assez rédhibitoire, de l'ordre de 15%.

On connait également des détecteurs en TEP basés sur l'utilisation de Xénon liquide ; de tels détecteurs présentent également des caractéristiques moins intéressantes que celles des détecteurs à cristaux, en particulier les détecteurs LSO. Ainsi, les détecteurs à Xénon liquide présentent une longueur d'atténuation grande et nécessitent une épaisseur active de l'ordre de 10cm pour convertir 95% des photons avec une probabilité de conversion photoélectrique de l'ordre de 21% ; en outre, ces détecteurs nécessitent l'utilisation d'un système cryogénique complexe avec des systèmes de purification des liquides difficiles à mettre en oeuvre. Des exemples de tels détecteurs sont décrits dans les articles "Simultaneous reconstruction of scintillation light and ionization charge produced by 511 keV photons in liquid xenon : Potential application to PET" (Amaudruz P et al, Nuclear Instruments and Methods in Physics Research A, vol. 607, no 3, 21 août 2009), "Liquid Xenon multiwire chamber for positron tomography" (Chepel V. Yu et al, Nuclear Instruments and Methods in Physics Research A, vol. A367, no. 1, 11 décembre 1995) ou "A new liquid xenon scintillation detector for positron emission tomography" (Chepel V. Yu et al, International Journal of Radiation Applications And Instrumentation. Part D. Nuclear Tracks And Radiation Measurements, Pergamon, vol. 21, no. 1, 1 janvier 1993).

Finalement, il convient de noter que, dans tous les cas, les scintillateurs ne permettent pas ou mal de localiser le point d'interaction du photon-gamma dans les trois dimensions mais seulement dans deux. La profondeur d'interaction reste alors inaccessible, ce qui conduit actuellement, par défaut, à la considérer identique pour tous les événements (en face avant du détecteur). C'est cette absence d'information qui est à l'origine d'une dégradation de la résolution spatiale radiale lorsqu'on s'éloigne du centre du tomographe. L'erreur est limitée en utilisant des cristaux de petite taille et denses afin de limiter leur surface active et leur épaisseur en conservant une efficacité de détection raisonnable ; le coût de tels détecteurs reste toutefois important (fractionnement des cristaux) et l'épaisseur active pour convvertir efficacement les photons demeurent une limite technologique au-dessous de laquelle on ne peut pas aller.

Dans ce contexte, la présente invention a pour but de résoudre les inconvénients précédemment mentionnés en proposant un détecteur de photons à haute énergie offrant notamment une efficacité photoélectrique considérablement améliorée par rapport aux détecteurs existants, une résolution énergétique satisfaisante inférieure à 10%, une résolution temporelle de l'ordre de quelques nanosecondes et un positionnement en 3 dimensions des interactions avec une bonne résolution tout en permettant une mise en oeuvre simple, en particulier en milieu hospitalier.

A cette fin, l'invention propose un détecteur de photon à haute énergie tel que défini dans la revendication 1.

La présente invention résulte de la constatation surprenante, décrite en détail ultérieurement, qu'un milieu liquide, comprenant des atomes de haut numéro atomique, présente des caractéristiques remarquables pour la détection des photons.

L'invention utilise avantageusement le fait que le rapport photoélectrique est nettement meilleur (de l'ordre de 57%) par rapport aux cristaux connus (ou autres matériaux tels que le CdTe ou le Xénon liquide).

Il convient également de noter que la résolution en énergie est plus précise (inférieure à 10%) que pour le LSO considéré comme un cristal de référence.

On entend par scintillation tout processus de production de lumière générée par les électrons résultant de la conversion des photons de haute énergie.

Grâce à la structure d'un tel détecteur, il est possible de mesurer en 3D la position de l'interaction (i.e. génération du photon de scintillation) puisque les moyens collecteurs de charges (typiquement une grille de Frisch placée devant un plan de collection de charge pixélisée) donnent des indications sur deux dimensions correspondant à sa surface tandis que, en fonction du temps de dérive requis par les électrons d'ionisation pour atteindre les moyens collecteurs à partir de la détection de la scintillation par les moyens photodétecteurs (typiquement un photomultiplicateur ou une APD), la position de l'interaction dans l'épaisseur du détecteur peut être déterminée.

Par ailleurs, l'utilisation d'un milieu de détection liquide, de préférence peu polaire ou apolaire, permet, d'une part, d'observer le déplacement de l'électron sur des distances relativement importantes - améliorant ainsi la résolution de la détection - et, d'autre part, d'obtenir des temps de décroissance de la scintillation de l'ordre de la nanoseconde.

Pour fonctionner, le détecteur selon l'invention utilise donc :
- un milieu de détection (liquide dans les conditions d'utilisation) comportant des atomes lourds, typiquement de numéro atomique supérieur ou égal à 72, dont la fraction de masse au sein de la molécule est préférentiellement importante (avantageusement supérieure ou égale à 20% et de manière encore plus avantageuse supérieure à 50%). Les atomes de numéro atomique supérieur ou égal à 72 sont par exemple présents au sein de molécules organiques, sous la forme de complexes ou d'agrégats. Ce milieu de détection non radioactif va permettre la dérive des électrons d'ionisation. Il sera avantageusement limpide et scintillant, même faiblement. Il pourra être rendu scintillant via un dopage par un additif scintillant en faible proportion en masse. Ce milieu de détection sera de préférence apolaire (ou faiblement polaire) et aprotique pour permettre une dérive plus efficace des électrons ;
- des moyens photodétecteurs qui participeront à l'obtention d'une bonne résolution en temps et de la reconstruction en trois dimensions de la position des interactions ;
- des moyens collecteurs de charge permettant de mesurer l'énergie déposée dans le détecteur et la position des interactions en deux dimensions.

Le détecteur selon l'invention peut également présenter une ou plusieurs des caractéristiques ci-dessous, considérées individuellement ou selon toutes les combinaisons techniquement possibles :
- ledit milieu de détection est apolaire ;
- ledit milieu de détection est aprotique ;
- l'atome lourd (tel que qu'un atome de W, Hg, Bi, Pb ou Au) représente une proportion massique majoritaire de la molécule ;
- la molécule est du triméthyl -bismuth, ou (CH₃)₃Bi ;
- le milieu de détection comprend un additif scintillant ; cet additif pourra être formé par des molécules ayant les mêmes propriétés que le liquide de détection principal afin de permettre la dérive de charges ;
- ledit additif scintillant est un alcane ;
- lesdits moyens photodétecteurs sont formés par un des dispositifs suivants :
   o un photomultiplicateur ;
   o une photodiode à avalanche ;
   o un MMPC ou compteur de photons multi-pixels ;
- lesdits moyens collecteurs de charges comportent une grille de Frisch ;
- lesdits moyens collecteurs de charges comportent un plan muni d'une pluralité de pixels aptes à localiser l'électron de dérive dans ledit plan.

La présente invention a également pour objet un dispositif de tomographie par émission de position comportant au moins un détecteur selon l'invention.

D'autres caractéristiques et avantages de l'invention apparaîtront à la lumière de la description ci-dessous, effectuée à titre illustrative et non limitatif, en référence aux figures ci-jointes sur lesquelles :
- à la figure 1, déjà décrite, est représentée de façon schématique la mise en oeuvre d'une TEP selon l'art antérieur,
- à la figure 2 déjà décrite partiellement, sont représentées des paramètres physiques de différents matériaux pouvant être utilisés dans un détecteur pour TEP, et
- à la figure 3 est représenté de façon schématique et partielle un détecteur conforme à l'invention.

En référence à la figure 3 est illustré partiellement un détecteur 400 conforme à l'invention comprenant une enceinte 411 formant une chambre à ionisation remplie d'un milieu 402 détecteur de photons 403 à haute énergie ou milieu de détection.

Ce milieu de détection 402 est formé par un liquide, de préférence apolaire (i.e. possédant un moment dipolaire permanent nul), aprotique (i.e. dénué d'atomes d'hydrogène susceptibles de former des liaisons hydrogènes) et avantageusement électroniquement stable, c'est-à-dire dont les orbitales sont pleines.

Ce liquide est formé majoritairement par des molécules comportant au moins un atome de numéro atomique supérieur à 72, en particulier un atome métallique tel que du tungstène (W, Z=74), de l'or (Au, Z=79), du mercure (Hg, Z= 80), de plomb (Pb, Z=82) ou préférentiellement du Bismuth (Z= 83).

Dans cette réalisation, cet atome est ainsi le Bismuth qui est associé à trois ligands méthyle pour former une molécule Bi(CH3)₃, également représenté comme TMBi (triméthyl -bismuth), qui est liquide aux températures usuelles d'utilisation courante (i.e. de -40°C à 60°C) et accessible dans le commerce à un prix industrialisable. Le milieu de détection 402 utilisé doit être liquide dans les conditions de fonctionnement du détecteur 400 (en d'autres termes, on peut envisager un milieu se trouvant dans une autre phase, solide par exemple, hors des conditions de fonctionnement du détecteur).

Le liquide utilisé remplit la totalité de l'enceinte 411 et doit être le plus pur possible (i.e. contamination équivalent oxygène, de l'ordre de 0.1 ppb).

Il convient de noter que le TMBi présente, en milieu liquide pur, une faible densité (2,3) ce qui entraîne un arrêt d'un nombre plus limité (85%) de photons au regard des 95% correspondant pour des cristaux (figure 3) tels que le LSO.

Toutefois, il apparaît que le rapport photoélectrique (c'est-à-dire le rapport de la section efficace photoélectrique sur la section efficace totale) est nettement meilleur (de l'ordre de 57%, figure 3) par rapport aux cristaux connus (ou autres matériaux tels que le CdTe ou le Xénon liquide).

Il convient également de noter que la résolution en énergie est plus précise (inférieure à 10%) que pour le LSO considéré comme un cristal de référence.

Le TMBi présente par ailleurs une constante de temps de décroissance τ_{S} de la scintillation lumineuse courte (de l'ordre de la nanoseconde) permettant de réduire la fenêtre temporelle de coïncidence, et ainsi de rejeter un nombre important de coïncidences aléatoires.

Le TMBi, et de manière plus générale le milieu de détection 402 tel que défini, présente également l'avantage de former un liquide dans lequel la dérive de charge permettra une localisation des interactions dans le plan de collection de charge jusqu'à sur une distance de l'ordre de 150 microns.

Grâce à de telles caractéristiques, ce milieu présente des propriétés particulièrement remarquables pour la détection des photons. De fait, la propriété apolaire, aprotique et électroniquement stable du liquide lui permet d'avoir un comportement proche du comportement d'un gaz rare liquide, ce qui permet la dérive des charges et de générer un signal d'ionisation combinée à un temps de décroissance de scintillation particulièrement réduit (cf. figure 2 : 4 ns pour le Xénon).

Pour ce faire, outre le matériau absorbant utilisé, le détecteur 400 selon l'invention se différencie également des détecteurs existants en ce qu'il n'utilise pas la scintillation pour quantifier l'énergie déposée dans le détecteur ni pour déterminer directement la localisation de l'interaction, mais pour dater une interaction (comme nous l'expliquerons dans la suite de la description) puis, si cela s'avère nécessaire, pour reconstruire la position de l'interaction dans l'épaisseur du détecteur.

Ainsi, le milieu de détection 402 de la chambre à ionisation 411 se trouve entre deux plaques en regard l'une de l'autre :
- une première plaque 404 photo-détectrice (cette plaque 404 utilise par exemple des photomultiplicateurs ou des photodiodes à avalanche APD, ou MMPC) ;
- une deuxième plaque 406 de type grille de Frisch devant un circuit électrique pixellisé (les pixels 410 ont typiquement une taille de l'ordre du mm définissant la résolution spatiale relative à la localisation de l'interaction).

Les paramètres importants permettant de choisir les moyens photodétecteurs de la première plaque 404 sont : l'efficacité quantique, le gain et le temps de montée des impulsions. Les photomultiplicateurs sont excellent en termes de gain et de temps de montée, mais sont encombrants, et souvent peu efficaces. On utilise maintenant préférentiellement des APDs pour détecter des photons de scintillation. La société AdvancedPhotonix™ commercialise des APDs présentant des performances très intéressantes, par exemple l'APD dont la référence est: SD630-70-74-500.

Des moyens d'alimentation permettent d'appliquer une différence de potentiel (ici -10kV-0kV) entre les deux plaques 404 et 406 de façon à créer un champ électrique à l'intérieur de la chambre d'ionisation 411. Ledit champ électrique est sensiblement perpendiculaire aux plaques 404 et 406.

Le principe de fonctionnement du détecteur 400 selon l'invention est alors le suivant.

Le milieu de détection 402 reçoit les photons-gamma issus de l'annihilation de positron et convertit en lumière 408 (photons de scintillation) et en charges (paires ions-électrons libres, dits d'ionisation) l'énergie des photons-gamma 403 essentiellement par effet photoélectrique.

La première plaque 404 photo-détectrice va alors détecter les photons de scintillation 408 pour « signer » une interaction dans le détecteur 400 (quelques nanosecondes après l'interaction). La première plaque 404 permet ainsi de dater l'interaction (détermination d'un temps de déclenchement).

Les électrons d'ionisation 405 libérés par les radiations ionisantes vont dériver sous l'effet du champ électrique jusqu'à la plaque 406 où ils sont collectés et quantifiés.

Ainsi, les charges électriques (électrons d'ionisation), formées après absorption des photons 403 par le milieu de détection 402, dérivent avec une durée proportionnelle à leur distance D vis-à-vis de ce circuit pixellisé.

La collection des électrons d'ionisation sur un pixel 410 particulier permet de localiser l'interaction en deux dimensions (i.e. dans le plan z-x qui est le plan des plaques 404 et 406).

Pour les moyens collecteurs de charge formés par la deuxième plaque 406, la grille de Frisch se révèle particulièrement utile lorsqu'on souhaite une bonne résolution en énergie par la mesure des charges collectées. Le plan de collection de charge, placé derrière la grille de Frisch, peut être finement pixélisé. On pourra avoir recours à des technologies ASIC si l'on veut lire un plan de collection de charge densément pixélisé.

En outre, comme mentionné plus haut, la détection de la scintillation par la plaque photo-détectrice 404 permet de démarrer la mesure du temps de dérive des électrons d'ionisation 405 dans la chambre ionisante 411. Dès lors, connaissant le temps de démarrage et le temps de dérive des électrons d'ionisation, on en déduit la distance parcourue D parallèle au champ électrique de dérive, c'est-à-dire dans l'épaisseur (i.e. suivant l'axe y) du détecteur 400. Cette distance permet donc de localiser l'interaction dans l'épaisseur du détecteur 400.

Ainsi, le détecteur permet une mesure 3D de la position de l'interaction (i.e. génération des photons de scintillation) puisque la grille 406 de pixels 410 donne des indications sur deux dimensions correspondant à sa surface (axes x et z du repère représenté) tandis que, en fonction du temps de dérive requis par l'électron dans un champ connu, la distance D, et donc la position de l'interaction sur l'axe y représenté, peut être aisément déterminée.

En combinant le milieu et la structure précédemment décrites, des évaluations théoriques déterminent une efficacité photoélectrique de 57% et une résolution énergétique de 10%, avec une résolution en temps de quelques ns et un positionnement des interactions avec une précision d'un millimètre en 3D.

On notera que le fait que le rendement de scintillation soit beaucoup plus faible dans un matériau tel que le TMBi importe peu ici (seul compte la présence de scintillation) dans la mesure où la scintillation ne sert qu'à déterminer le temps initial de la dérive de l'électron suivant l'axe du champ électrique.

On notera également que la résolution en 2D est donnée par la résolution de pixellisation (i.e. taille et espacement des pixels 410 sur la plaque de collection de charge placée derrière la grille de Frisch 406).

Ainsi, un détecteur conforme à l'invention présente une efficacité supérieure aux détecteurs existants.

La présente invention est susceptible de nombreuses variantes, notamment quand à la nature et au nombre de métaux lourds mis en oeuvre dans le liquide même si le bismuth s'avère être un candidat particulièrement efficace.

Par ailleurs, la structure des molécules organiques comportant les atomes lourds peut varier : typiquement, elle correspondra à des ligands organiques associés à un ou plusieurs atomes lourds. Les ligands correspondront généralement à des chaînes alkyles ou cycloalkyles. De manière avantageuse, les ligands ne comporteront pas d'atomes susceptibles d'induire une polarisation de la molécule.

Par ailleurs ces atomes lourds pourront être utilisés sous forme de complexes mononucléaires, polynucléaires ou de particules de tailles submicrométriques

Il est également clair qu'un détecteur conforme à l'invention peut être mis en oeuvre pour différentes applications, notamment vis-à-vis d'organisme de taille importante (TEP du corps humain), de taille moyenne (TEP d'une partie du corps humain) ou de faible taille (TEP « petit animal »), voir et de manière particulièrement intéressante, dans le cadre d'études précliniques et en pharmacologie, pour réaliser l'imagerie simultanée de plusieurs petits animaux.

De fait, les TEP petit animal représentent 90% des dispositifs de TEP ; à l'heure actuelle, ces derniers sont mis en oeuvre individu par individu alors qu'un détecteur conforme à l'invention permettrait de réaliser des TEP pour plusieurs individus simultanément en utilisant avantageusement la localisation en trois dimensions permettant de palier les problèmes liés à l'absence d'information à l'origine d'une dégradation de la résolution spatiale radiale lorsqu'on s'éloigne du centre du tomographe.

## Revendications

1. Détecteur (400) de photon (403) à haute énergie comprenant :
- des moyens photodétecteurs (404) ;
- un milieu de détection (402) destiné à absorber un photon (403) à haute énergie en générant des électrons d'ionisation (405) et des photons (408) selon un phénomène luminescent, détectés par lesdits moyens photodétecteurs (404),
ledit milieu de détection (402) étant formé par des molécules telles que, dans les conditions de fonctionnement du détecteur, ce milieu de détection (402) soit liquide, ledit détecteur (400) comprenant :
- des moyens pour faire dériver les électrons d'ionisation (405) générés par le photon absorbé (403) ;
- des moyens collecteurs (406) de charges pour déterminer le temps de dérive desdits électrons (405) vers lesdits moyens collecteurs de charge (406) à partir d'un temps de déclenchement correspondant à la détection du phénomène luminescent par lesdits moyens photodétecteurs (404).
ledit détecteur (400) étant **caractérisé en ce que** la molécule du milieu de détection est formée par un atome métallique lourd de numéro atomique supérieur ou égal à 72 lié à des ligands du type alkyle, ledit atome lourd étant choisi parmi l'un des atomes suivants : W, Hg, Bi, Pb ou Au.

2. Détecteur (400) de photons selon la revendication 1 **caractérisé en ce que** ledit milieu de détection (402) est apolaire.

3. Détecteur (400) de photons selon l'une des revendications précédentes **caractérisé en ce que** ledit milieu de détection (402) est aprotique.

4. Détecteur (400) de photons selon l'une des revendications précédentes **caractérisé en ce que** l'atome lourd (W, Hg, Bi, Pb, Au) représente une proportion massique majoritaire de la molécule.

5. Détecteur (400) selon la revendication 4 **caractérisé en ce que** la molécule est du triméthyl -bismuth, ou (CH₃)₃Bi.

6. Détecteur (400) selon l'une des revendications précédentes **caractérisé en ce que** le milieu de détection comprend un additif scintillant.

7. Détecteur (400) de photons selon la revendication 6 **caractérisé en ce que** ledit additif scintillant est un alcane.

8. Détecteur (400) de photons selon l'une des revendications précédentes **caractérisé en ce que** lesdits moyens photodétecteurs (404) sont formés par un des dispositifs suivants :
- un photomultiplicateur ;
- une photodiode à avalanche,
- un MMPC ou compteur de photons multi-pixels.

9. Détecteur (400) de photons selon l'une des revendications précédentes **caractérisé en ce que** lesdits moyens collecteurs (406) de charges comportent une grille de Frisch.

10. Détecteur (400) de photons selon l'une des revendications précédentes **caractérisé en ce que** lesdits moyens collecteurs (406) de charges comportent un plan muni d'une pluralité de pixels aptes à localiser l'électron de dérive dans ledit plan.

11. Dispositif de tomographie par émission de positions comportant au moins un détecteur selon l'une des revendications 1 à 10.

## Patentansprüche

1. Detektor (400) von Photonen (403) mit hoher Energie, umfassend:
- Photodetektormittel (404);
- ein Detektionsmilieu (402), das zum Absorbieren eines Photons (403) mit hoher Energie durch Generieren von Ionisationselektroden (405) und Photonen (408) gemäß einem Leuchtphänomen bestimmt ist, die durch die genannten Photodektormittel (404) detektiert werden, wobei das genannte Detektionsmilieu (402) durch Moleküle derart gebildet wird, dass unter den Betriebsbedingungen des Detektors dieses Detektionsmilieu (402) flüssig ist, wobei der genannte Detektor (400) umfasst:
- Mittel, um die durch das absorbierte Photon (403) generierten Ionisationselektroden (405) ableiten zu lassen;
- Erfassungsmittel (406) von Lasten zur Bestimmung der Ableitzeit der genannten Elektronen (405) zu den genannten Lasterfassungsmitteln (406) ab einer der Detektion des Leuchtphänomens durch die genannten Photodetektormitteln (404) entsprechenden Auslösezeit,
wobei der genannte Detektor (400) **dadurch gekennzeichnet ist, dass** das Molekül des Detektionsmilieus durch ein Schwermetallatom mit einer Atomzahl von höher als oder gleich 72 gebildet wird, das mit Liganden vom Typ Alkyl verbunden ist, wobei das genannte schwere Atom aus einem der folgenden Atome ausgewählt ist: W, Hg, Bi, Pb oder AU.

2. Photonendetektor (400) gemäß Anspruch 1, **dadurch gekennzeichnet, dass** das genannte Detektionsmilieu (402) apolar ist.

3. Photonendetektor (400) gemäß einem der voranstehenden Ansprüche, **dadurch gekennzeichnet, dass** das genannte Detektionsmilieu (402) aprotisch ist.

4. Photonendetektor (400) gemäß einem der voranstehenden Ansprüche, **dadurch gekennzeichnet, dass** das schwere Atom (W, Hg, Bi, Pb, Au) eine mehrheitliche Masseproportion des Moleküls darstellt.

5. Detektor (400) gemäß Anspruch 4, **dadurch gekennzeichnet, dass** das Molekül Trimethyl-Bismut oder (CH₃)₃Bi ist.

6. Detektor (400) gemäß einem der voranstehenden Ansprüche, **dadurch gekennzeichnet, dass** das Detektionsmilieu einen funkelnden Zusatzstoff umfasst.

7. Photonendetektor (400) gemäß Anspruch 6, **dadurch gekennzeichnet, dass** der genannte funkelnde Zusatzstoff ein Alkan ist.

8. Photonendetektor (400) gemäß einem der voranstehenden Ansprüche, **dadurch gekennzeichnet, dass** die genannten Photodetektormittel (404) durch eine der folgenden Vorrichtungen gebildet werden:
- einen Photovervielfacher;
- eine Avalanche-Photodiode
- ein MMPC oder Multipixel-Photonenzähler.

9. Photonendetektor (400) gemäß einem der voranstehenden Ansprüche, **dadurch gekennzeichnet, dass** die genannten Erfassungsmittel (406) von Lasten ein Frisch-Gitter umfassen.

10. Photonendetektor (400) gemäß einem der voranstehenden Ansprüche, **dadurch gekennzeichnet, dass** die genannten Erfassungsmittel (406) von Lasten eine mit einer Vielzahl von Pixeln versehene Ebene umfassen, die geeignet sind, das Ableitungselektron in der genannten Ebene zu lokalisieren.

11. Tomographievorrichtung per Positionsausgabe, umfassend wenigstens einen Detektor gemäß Anspruch 1 bis 10.

## Claims

1. A detector (400) for high energy photon (403) comprising:
- photodetector means (404);
- a detection medium (402) for absorbing a high energy photon (403) by generating ionization electrons (405) and photons (408) along a luminescent phenomenon, which are detected by said photodetector means (404),
said detection medium (402) being formed by molecules such that, under the operating conditions of the detector, this detection medium (402) is liquid, said detector (400) comprising:
- means for drifting the ionization electrons (405) generated by the absorbed photon (403);
- charge collecting means (406) for determining the drift time of said electrons (405) to said charge collecting means (406) from a triggering time corresponding to the detection of the luminescent phenomenon by said photodetector means (404);
said detector (400) being **characterised in that** the molecule of the detection medium is formed by a heavy metal atom having an atomic number equal to or higher than 72 bound to alkyl-type ligands, said heavy atom being selected from one of the following atoms: W, Hg, Bi, Pb, or Au.

2. The photon detector (400) according to claim 1, **characterised in that** said detection medium (402) is apolar.

3. The photon detector (400) according to one of the preceding claims, **characterised in that** said detection medium (402) is aprotic.

4. The photon detector (400) according to one of the preceding claims, **characterised in that** the heavy atom (W, Hg, Bi, Pb, Au) represents a predominant content of the molecule.

5. The detector (400) according to claim 4, **characterised in that** the molecule is trimethylbismuth, or (CH₃)₃Bi.

6. The detector (400) according to one of the preceding claims, **characterised in that** the detection medium comprises a scintillating additive.

7. The photon detector (400) according to claim 6, **characterised in that** said scintillating additive is an alkane.

8. The photon detector (400) according to one of the preceding claims, **characterised in that** said photodetector means (400) are formed by one of the following devices:
- a photomultiplier;
- an avalanche photodiode,
- a MPPC or multi-pixel photon counter.

9. The photon detector (400) according to one of the preceding claims, **characterised in that** said charge collecting means (406) include a Frisch grid.

10. The photon detector (400) according to one of the preceding claims, **characterised in that** said charge collecting means (406) include a plane provided with a plurality of pixels able to localize the drift electron in said plane.

11. A positron emission tomography device including at least one detector according to one of claims 1 to 10.
